Europäisches Patentamt

European Patent Office

Office européen des brevets

(11) Veröffentlichungsnummer: **0 288 816**
**A1**

(12) **EUROPÄISCHE PATENTANMELDUNG**

(21) Anmeldenummer: 88105844.0

(22) Anmeldetag: 13.04.88

(51) Int. Cl.⁴ **H02K 1/28 , H02K 21/24**

(30) Priorität: 23.04.87 DE 3713610

(43) Veröffentlichungstag der Anmeldung:
02.11.88 Patentblatt 88/44

(84) Benannte Vertragsstaaten:
AT BE CH DE ES FR GB GR IT LI LU NL SE

(71) Anmelder: HELDT & ROSSI
SERVOELEKTRONIK GMBH
Zeppelinstrasse 40
D-7302 Ostfildern 4(DE)

(72) Erfinder: Rossi, Lothar
In den Steinen 12
D-7302 Ostfildern 2(DE)

(74) Vertreter: Otte, Peter, Dipl.-Ing.
Tiroler Strasse 15
D-7250 Leonberg(DE)

(54) Rotor für Elektromotor.

(57) Bei einem Rotor für Elektromotoren, insbesondere einem scheibenförmigen Rotor mit in Winkelsegmenten und gegenseitigem Abstand angeordneten Flachmagneten, die von beidseitigen, mit einer Nabe verbundenen Lagerscheiben gehalten sind, wird vorgeschlagen, in die Lagerscheiben Fensterausschnitte entsprechend der äußeren Form der Flachmagnete anzuordnen, so daß die Flachmagnete ohne Abdeckung in axialer Richtung zwischen den Lagerscheiben sitzen, von diesen in Drehrichtung und durch einen einstückigen, äußeren Randring gegen Zentrifugalkrafteinwirkung gesichert sind und wobei ferner zur axialen Führung der Flachmagnete noch innere Vorsprünge einstückig an den inneren zentralen Ringscheibenbereich angesetzt sind, die den Flachmagneten axial sichern. Die sich zwischen den Flachmagneten einander annähernden Speichenstege bilden mit dem äußeren einstückigen Reifenring eine steife Dreieckkonstruktion.

Fig. 3

## Rotor für Elektromotor

Stand der Technik

Die Erfindung geht aus von einem Rotor für Elektromotoren nach dem Oberbegriff des Anspruchs 1. Es handelt sich hier um solche Elektromotoren, bei denen die Läufer oder Rotoren Permanentmagnete aufweisen, die also schleifringlos aufgebaut sind und in einem speziellen Fall, auf den im folgenden auch eingegangen wird, auf den die Erfindung allerdings nicht beschränkt ist, in ihrer Funktion etwa wie Synchronmaschinen arbeiten und als bürstenlose Gleichstrommotoren bezeichnet werden können.

Bei solchen Elektromotoren ist es üblich, den Rotor mit in Winkelsegmenten über den Scheibenumfang verteilten Permanentmagneten auszurüsten, wobei es sich hierbei um Flachmagnete handeln kann, die unter Umständen eine Dicke von nicht mehr als nur 3 mm, jedenfalls in dieser Größenordnung, aufweisen. Diese Magneten stehen dann in elektromagnetischer Wirkverbindung mit beispielsweise beidseitig einwirkenden, von in axialer Schichtung mit dem Rotor angeordneten Spulen herrührenden Magnetfeldern. Die jeweili gen, segmentartigen Magnete, mit denen der Rotor bestückt ist, weisen eine axiale Magnetisierung auf, wobei angestrebt wird, zur Erzielung eines guten Wirkungsgrads den Luftspalt in axialer Richtung zu den angrenzenden, die wandernden Magnetfelder erzeugenden Strukturen möglichst klein zu halten.

Ein Problem bei einem solchen Elektromotor ist die einwandfreie Halterung der den Läufer bildenden Magnete, die möglichst genau, mit engstem Luftspalt und natürlich alterungsbeständig sein muß.

Es ist daher bekannt, die sich jeweils über bestimmte Winkelsegmente einer Kreisscheibe, die dann den Rotor bildet, erstreckenden Teilmagnete in Kunststoff einzugießen, so daß sich ein - scheiben-oder radförmiger Rotor ergibt, allerdings mit dem Nachteil, daß der Kunststoff altern oder sich verziehen kann und ferner durch die (beidseitige) Überdeckung der in den Kunststoff eingebetteten Magnete viel an nutzbarem Luftspalt verlorengeht.

Es ist ferner bekannt, die Lagerung der Magnete auf einer an der Rotorwelle befestigten Nabe mit Hilfe von beidseitigen Metallscheiben (Edelstahlscheiben) vorzunehmen, indem die Magnetsegmente zwischen die beiden Scheiben eingelegt und dort befestigt werden, üblicherweise durch Kleben, wobei dann allerdings außen noch eine ringförmige Sicherungsmanschette oder Bandage aufgebracht werden muß, die die beidseitig mit den Metallscheiben durch Klebung verbundenen Magnetsegmente gegen die zum Teil sehr hohen Fliehkraftauswirkungen sichert und an Ort und Stelle hält. Eine solche Bandage kann beispielsweise ein peripherer Glasfaserverbund sein.

Der Gesamtaufbau eines solchen, beidseitig Edelstahlscheiben umfassenden Rotors mit peripherer Glasfaserbandage ist nicht unkompliziert, so daß sich schon vom Aufbau und seiner Herstellung Nachteile ergeben; ferner geht aber auch bei einer solchen Konstruktion wegen der erforderlichen Blechdicke und gegebenenfalls auch infolge der Abdeckung der Magneten viel an nutzbarem Luftspalt verloren. Schließlich wird der die Magnetsegmente innerhalb der beiden Scheiben primär sichernde Klebstoff durch die einwirkende Fliehkraft hauptsächlich auf Scherwirkung beansprucht; dies ist aber eine Einwirkung, bei denen auch gute Klebstoffe den erforderlichen Festigkeitsansprüchen nicht immer genügen können.

Der Erfindung liegt daher die Aufgabe zugrunde, bei einem Rotor für Elektromotoren eine Halterung für jeweils in bestimmten Winkelsegmenten über den Umfang angeordnete Einzelmagnete (Magnetsegmente) zu schaffen, die einerseits mechanisch wenig aufwenig und daher kostengünstig und einfach ist, andererseits aber die Magnete in jeder Beziehung sicher gegen äußere Krafteinwirkung, insbesondere gegen Fliehkraftwirkung unverrückbar hält, ohne daß eine Abdeckung der Magnetsegmente auf ihren axialen Flächen erforderlich ist.

Vorteile der Erfindung

Der erfindungsgemäße Rotor löst diese Aufgabe mit den kennzeichnenden Merkmalen des Hauptanspruchs in verblüffend einfacher Weise,obwohl zunächst angenommen werden muß, daß diese Forderungen wegen ihrer gegensätzlichen Natur nur mit hohem Aufwand realisiert werden können, wenn überhaupt.

Dabei ergibt sich durch die Erfindung noch der entscheidende Vorteil, daß die Lagerung aus einem einzigen Material besteht, also Bandagen oder separate Sicherungsringe überflüssig sind; dennoch sitzen die Magnetsegmente mit freien axialen Flächen bei daher möglichem engstem Luftspalt vollkommen sicher gegen jede Art von axialer, radialer und in Drehrichtung wirkenden Kräften in ihren Ausnehmungen.

Von Vorteil ist ferner, daß durch die Erfindung eine besonders präzise und unveränderliche Lagerung für die Magnetsegmente möglich ist, die auch durch Alterseinflüsse in ihrer Beständnigkeit weder Form noch Justierung verlieren kann.

Tatsächlich sichern nämlich die gleichen Teile, die die Magneten axial auf der Nabe positionieren, gleichzeitig die Magnete an ihrem äußeren Umfang auf dem Flachmagnetläufer gegen jede Art von einwirkenden Fliehkräften, ohne daß noch zusätzliche Hilfsmittel erforderlich sind.

Die Erfindung, die im Grundprinzip einen steifen Dreiecksverbund bildet, nimmt die jeweiligen Magnetsegmente in taschenförmigen Ausnehmungen auf, sichert aufgrund ihrer gleichmäßigen Struktur über den Umfang des Rotors diesen gegen jegliche Unwuchteinflüsse, ist mechanisch wenig aufwendig, stellt aber eine mechanisch starre Verbindung in jeder Richtung dar, ist also insbesondere auch gegen ein Abbiegen oder Kippen geschützt.

Durch die in den Unteransprüchen aufgeführten Maßnahmen sind vorteilhafte Weiterbildungen und Verbesserungen des im Hauptanspruch angegebenen Rotors möglich. Besonders vorteilhaft ist, daß dann, wenn zur Verbindung der hier speziell ausgebildeten mindestens einen Lagerscheibe mit der auf der Rotorwelle sitzenden Nabe und/oder den Magneten Kleber verwendet werden, diese nicht auf Scherung beansprucht sind; es ist andererseits auch möglich, auf ein Verkleben ganz zu verzichten und die Scheibe(n) durch sonstige Befestigungsmittel, beispielsweise Nieten, auf der Nabe und gegeneinander zu sichern.

Zeichnung

Ein Ausführungsbeispiel der Erfindung ist in der Zeichnung dargestellt und wird in der nachfolgenden Beschreibung näher erläutert. Es zeigen:

Fig. 1 schematisiert und im Teilausschnitt eine Seitenansicht einer Ausführungsform des der Erfindung zugrundeliegenden Rotors für einen Elektromotor mit an die Magnete des Rotors beidseitig angrenzenden, die für die Drehbewegung des Rotors erforderlichen magnetischen Wechselfelder erzeugenden Spulenstrukturen;

Fig. 2 in Draufsicht eine Ausführungsform des Rotors mit Wellennabe und in fensterartige Ausschnitte mindestens eines Rotorscheibenblechs eingesetzten Permanentmagneten und

Fig. 3 die Ausführungsform der Fig. 2 in einer Seitenansicht, aus der die Lagerung der Magneten auf der Nabe und die Verbindung und Anordnung der Lagerscheiben deutlich wird.

Beschreibung der Ausführungsbeispiele

Der Grundgedanke vorliegender Erfindung besteht darin, jeden den Rotor zu einer Kreisform vervollständigenden Permanentmagneten (Flachmagneten) in einem fensterartigen Ausschnitt mindestens einer Lagerscheibe bündig einzusetzen und zu halten, wobei die Lagerscheibe fest mit einer auf der Rotorwelle angeordneten Nabe verbunden ist und wobei mit Vorzug zwei Lagerscheiben verwendet sind, die die Nabe beidseitig zwischen sich einschließen, mit Fortsätzen teilweise auch angrenzende Bereiche der Permanentmagneten noch durch geringfügige Überdeckung mit Randstreifen axial sichern, sich zwischen den Permanentmagneten mit speichenartigen, einstückigen Stege der Lagerscheiben jeweils verjüngend aneinander annähern und in gegenseitiger Anlage in einen Außenring einstückig übergehen, der die Permanentmagnete gegen Fliehkrafteinwirkungen formschlüssig sichert und diese auffängt.

Die erfindungsgemäße Lagerstruktur für eine Vielzahl von über den Kreisumfang des Flachmagnetläufers oder -rotors angeordneten Permanentmagnete besteht also unter Verzicht auf alle zusätzlichen Hilfsmittel lediglich aus mindestens einer, mit Vorzug aus zwei Lagerscheiben, die in Fensterausschnitten die Flachmagnete ohne Überdeckung in axialer Richtung aufnehmen und axial, radial und in Drehrichtung unverrückbar lagern und festhalten.

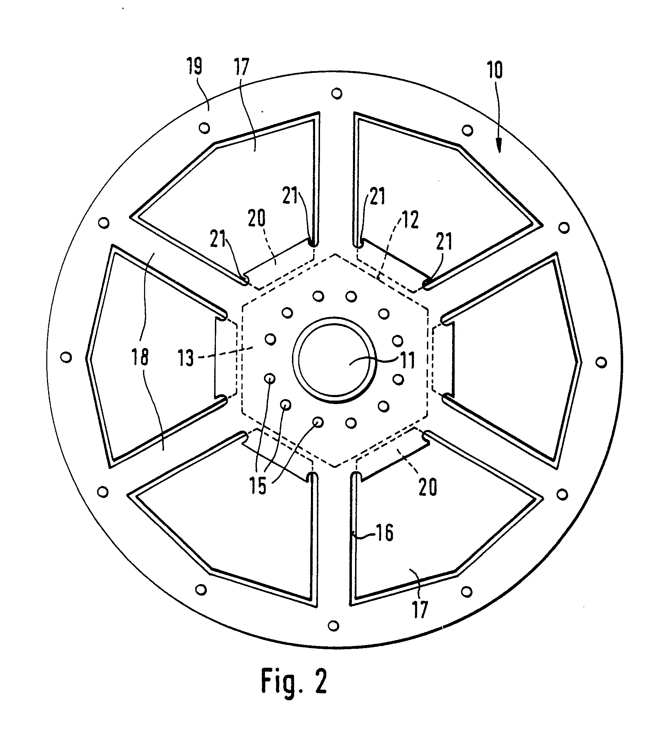

In der Darstellung der Fig. 2 ist, da der Rotor in Draufsicht dargestellt ist, lediglich eine der Lagerscheiben zu erkennen und mit 10 bezeichnet; auf einer zentralen Welle 11 sitzt eine in Fig. 2 nicht sichtbare und daher gestrichelt dargestellte, bei dem speziellen Ausführungsbeispiel sechseckige Nabe 12, die beispielsweise aufgepreßt oder in sonstwie geeigneter Weise mit der Welle 11 verbunden sein kann.

Wie die Darstellung der Fig. 3 zeigt, ist die Nabe 12 von beiden Seiten von inneren zentralen Ringscheibenbereichen 13a, 13b der beidseitigen Lagerscheiben 10a, 10b umfaßt, so daß die Lagerscheiben 10a, 10b auf der Nabe 12 sitzen. Die Befestigung der inneren Ringscheibenbereiche 13a, 13b an den zugewandten Nabenflächen kann durch Kleben oder auch durch sonstige Befestigungsmittel, beispielsweise Nieten 15 erfolgen.

Eine einfache, jedoch den Grundgedanken vorliegender Erfindung verwirklichende Ausführungsform besteht im übrigen darin, daß lediglich eine Lagerscheibe vorgesehen ist, die zentral auf der Nabe sitzend oder an dieser befestigt der Kontur der Flachmagneten folgend Fensterausschnitte aufweist, in die die Flachmagneten dann eingesetzt sind; auch hierdurch ergibt sich ein sicherer Halt in radialer Richtung und in Drehrichtung für die Permanentmagneten, wobei ein axialer Halt durch Klebung erreicht werden kann.

Das bevorzugte, in den Figuren dargestellte Ausführungsbeispiel geht jedoch von den beiden Lagerscheiben 10a, 10b aus, die jeweils Fensterausschnitte 16 aufweisen, die so ausgebildet sind, daß ein bündiges Einsetzen der jeweiligen Permanentmagnete in ihrer Flachmagnetform möglich ist; in Fig. 2 sind diese Flachmagnete mit 17 bezeichnet. Form und Art der Fensterausschnitte 16 und dementsprechend auch die äußere Kontur der in diesem jeweils bündig eingesetzten Flachmagneten 17 ist durchaus beliebig; die Grundstruktur jeder Lagerscheibe 10 - in der doppelten Ausführung des Flachmagnetrotors der Fig. 3 also 10a und 10b - ist dann so, wie in der Draufsicht der Fig. 2 erkennbar. Die Lagerscheibe 10 weist also einen inneren zentralen Ringscheibenbereich 13 auf, von dem, wie die Speichen eines Rades, Speichenstege 18 ausgehen, die an der äußeren Peripherie durch einen ebenfalls mit den Speichenstegen 18 einstückig verbundenen (Reifen)Ring 19 miteinander verbunden sind. Es ergibt sich daher für jede Lagerscheibe eine grundsätzliche Radform.

Eine vorteilhafte Ausgestaltung jeder Lagerscheibe besteht noch darin, daß angrenzend an den inneren zentralen Ringscheibenbereich 13 und zwischen jeweils zwei Speichenstegen noch axiale Haltestege oder Vorsprünge 20 einstückig vom zentralen Ringscheibenbereich ausgehen, die sich radial über den äußeren Umfang der Nabe 13 erstrecken. Durch beidseitige kleine Einschnitte 21 kann jeder Haltesteg 20 von den angrenzenden Speichenstegen 18 bis zu einer gewünschten Tiefe abgetrennt sein.

Die Anordnung und Befestigung der Flachmagneten 17 in der Gesamtstruktur aus beiden Lagerscheiben 10a, 10b erfolgt dann in besonderer Weise und wird im folgenden anhand der Darstellung der Fig. 3 erläutert.

Mit ihrer unteren, inneren Randkante 17a sitzen die Flachmagneten 17 jeweils auf der zugewandten Fläche der Nabe 13 auf; natürlich kann die Nabe auch eine runde Außenform aufweisen; in diesem Fall bilden dann die unteren Flächen 17a der Flachmagnete 17 eine konkave Kreisausschnittsform.

Da von beiden Seiten jeweils eine Lagerscheibe 10a, 10b an die Nabe 12 angesetzt ist, die die Flachmagneten 17 jeweils in ihren Fensterausschnitten 16 aufnimmt, erkennt man, daß jeder der Flachmagnete 17 mit seinem unteren Teil von den beiden sich noch etwas in radialer Richtung über die Außenbegrenzung der Nabe 12 hinaus erstreckenden beid seitigen Haltestegen 20a, 20b jeder Lagerscheibe 10a, 10b axial umfaßt wird und an dieser Stelle wie in einer Tasche sicher gegen jede axiale Bewegung sitzt und gesichert ist. Diese beiden Vorsprünge oder Haltestege 20a, 20b nehmen daher jeden Flachmagneten 17 als axiale Führung für diesen auf, wobei als weitere Besonderheit hinzukommt, daß die sich jeweils zwischen den Flachmagneten 17 befindlichen Speichenstege 18, die in der Fig. 3 mit 18a, 18b bezeichnet sind, axial einander annähern und dies in diesem Bereich auch können, da die Permanentmagneten 17 in den Fensterausschnitten sitzen und die Speichenstege 18a, 18b an der in Fig. 3 deutlich erkennbaren gegenseitigen Annäherung und daher Verjüngung nicht hindern können. Die Speichenstege 18a, 18b jeder der einander gegenüberliegenden Lagerscheiben 10a, 10b sind also nach innen eingedrückt geführt, nähern sich an und bilden dann im äußeren peripheren Bogen einen gemeinsamen Ring 21, der einstückig mit jedem der Speichenstege 18 verbunden ist.

Durch dieses Zusammenführen der beiden einander gegenüberliegenden Speichenstege 18a, 18b jeweils zwischen jedem der Flachmagneten 17 liegen an dieser Stelle, praktisch beginnend vom inneren zentralen Ringscheibenbereich bis zum äußeren Ring 21 jeweils die aneinandergrenzenden Kanten der Flachmagnete 17 und der Speichenstege 18 im Stoß aneinander bündig an, so daß, wie ohne weiteres zu erkennen, jeder der Flachmagnete 17 von allen Seiten durch die dreidimensionale Lagerscheibenstruktur aus zwei sich einander gegenüberliegenden Lagerscheiben 10a, 10b gehalten und sozusagen unverrückbar gefesselt ist.

In der Funktion kommt daher jede der Lagerscheiben 10a, 10b aus der im Abstand zueinander befindlichen axialen Nabenflächenebene, wo sie an dieser befestigt sind; in dieser Ebene werden auch durch die Haltevorsprünge 20a, 20b die Flachmagnete 17 axial zentriert; anschließend laufen die Scheibenstrukturen in Form der Speichenstege aus dieser Ebene nach innen aufeinander zu, vereinigen sich in der äußeren Reifenringform bei 21, nehmen über den Reifenring die einwirkenden Fliehkräfte sicher auf und schließlich sichern die sich effektiv zwischen den Flachmagneten 17 in Drehrichtung gesehen befindlichen Speichenstege die Permanentmagnete auch in dieser Richtung. Die Lagerscheiben laufen also zwischen den Magneten verjüngend, wobei im oberen Berührungsbereich des Reifenrings 21 die aneinandergrenzenden Flächen der beiden Lagerscheiben 10a, 10b miteinander verklebt oder, wie durch das Bezugszeichen 15 angedeutet, ebenfalls vernietet sein können. Eine Verklebung kann sich als vorteilhaft erweisen in dem Bereich, der in Fig. 2 mit 22 bezeichnet ist, also dort, wo die Flachmagnete mit ihren äußeren Randkanten innen an den Reifenring 21 anstoßen. Zwar ergeben sich keine nennenswerten Krafteinwirkungen in axialer Richtung auf die Permanentmagnete in diesem Bereich; eine Verklebung sichert aber den endgültigen fixierten Sitz und kann auch, wenn gewünscht, an allen anderen Berührungsbereichen der Flachmagneten 17 mit den Lagerscheiben, also zwischen den Speichenstegen 18a, 18b und auch im Sitzbereich auf der Nabe erfolgen.

Die völlig unverrückbare und sichere, vor allen Dingen aber auch besonders steife Lagerkonstruktion für die Permanentmagnete 17 ist erkennbar - besonders steif deshalb, weil es sich hier um einen Dreiecksverbund handelt, gebildet von den im inneren zentralen Ringscheibenbereich zunächst auseinanderstehenden Lagerscheiben, die sich dann nach außen im Übergang zum Reifenring 21 verjüngen, wobei durch die Befestigungen an der Nabe bzw. im Reifenring 21 aneinander die steife Dreiecksform gebildet ist, die jedes Kippen oder Biegen der Rotorstruktur verhindern.

Die Nabe kann auf der Motorwelle aufgepreßt oder aufgeschrumpft sein; auf die Quernietung bei 15 kann auch verzichtet werden, wenn man lediglich mit einem Kleber, vorzugsweise einem geeigneten Epoxidkleber, arbeiten will.

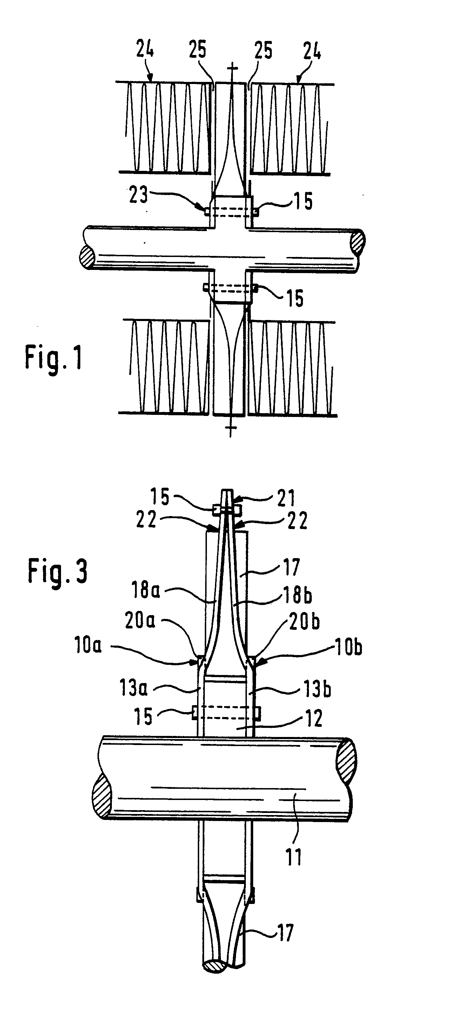

Die Darstellung der Fig. 1 zeigt im Ausschnitt die Gesamtstruktur; angrenzend an den in der geschilderten Form aufgebauten Rotor 23 befinden sich jeweils die magnetischen Wechselfelder für die die Rotorbewegung erzeugenden Spulenstrukturen 24, wobei der Luftspalt 25 zwischen dem jeweiligen Spulenjoch nicht durch für die Lagerung der Permanentmagneten erforderlichen Haltestrukturen verdeckt und daher in unnötiger Weise vergrößert ist.

Eine vorteilhafte Ausgestaltung der Erfindung besteht schließlich noch darin, die Quernietungen, also die Nieten 15, oben am Reifenring (21) und/oder bei der Nabenbefestigung entweder zur Lagerung von Auswuchtgewichten mitzubenutzen oder in einer Mehrfunktion diese selbst, gegebenenfalls unterschiedlich schwer und gegebenenfalls unterschiedlich, also den Gleichlaufanforderungen entsprechend ungleichmäßig, über den Umfang verteilt, anzuordnen.

Alle in der Beschreibung, den nachfolgenden Ansprüchen und der Zeichnung dargestellten Merkmale können sowohl einzeln als auch in beliebiger Kombination miteinander erfindungswesentlich sein.

**Ansprüche**

1. Rotor für Elektromotor, insbesondere - scheibenförmiger Rotor mit in Winkelsegmenten und gegenseitigem Abstand angeordneten Flachmagneten, die von mindestens einer, vorzugsweise von zwei auf beiden Seiten einer zentralen Nabe angesetzten Scheiben gehalten sind, dadurch gekennzeichnet, daß die mindestens eine mit der Nabe (12) der Rotorwelle (11) verbundene Lagerscheibe (10, 10a, 10b) der Kontur jedes Flachmagneten (17) entsprechende Fensterausschnitte (16) aufweist, die die Flachmagneten aufnehmen, wobei über die äußere Peripherie der Scheibe ein durchgehender einstückiger Randring (Reifenring 21) gebildet ist, an dessen inneren, von den Fensterausschnitten (16) gebildeten Rändern die Flachmagnete (17), gegen Zentrifugaleinflüsse gesichert, im Stoß anliegen.

2. Rotor nach Anspruch 1, dadurch gekennzeichnet, daß zwei Lagerscheiben (10a, 10b) vorgesehen und auf beiden Seiten der mit der Rotorwelle (11) verbundenen Nabe (12) mit einem inneren zentralen Ringscheibenbereich (13a, 13b) an der Nabe befestigt sind und daß von beiden Lagerscheiben (10a, 10b) zwischen den in den Fensterausschnitten (16) sitzenden Permanentmagneten (17) ausgehend Speichenstege (18) verlaufen, die sich, die äußere Rotorperipherie bildend zu einem Reifenring (21) einstückig vereinigen.

3. Rotor nach Anspruch 1 oder 2, dadurch gekennzeichnet, daß jede mit ihrem inneren zentralen Ringscheibenbereich (13a, 13b) auf den Nabenaußenflächen und daher im gegenseitigen Abstand befestigte Lagerscheibe (10a, 10b) eine allgemeine Radform aufweist mit den vom Ringscheibenbereich (13a, 13b) ausgehenden Speichenstegen (18a, 18b) und den an diesen einstückig angesetzten, äußeren Reifenring (21), wobei jede der Lagerscheiben (10a, 10b) sich über ihre Speichenstege (18a, 18b) der anderen allmählich annähert und den gemeinsamen Reifenring (21) bildet, über welchen die beiden im Nabenbereich getrennten Lagerscheiben an der äußeren Peripherie fest miteinander verbunden sind.

4. Rotor nach einem der Ansprüche 1 bis 3, dadurch gekennzeichnet, daß der innere zentrale Ringscheibenbereich jeder Lagerscheibe (10a, 10b) durch Nieten (15) mit der Nabe (12) verbunden ist.

5. Rotor nach einem der Ansprüche 1 bis 4, dadurch gekennzeichnet, daß die abstandsfrei aneinanderliegenden äußeren, mit den Speichenstegen (18) einstückigen, umlaufenden Ringstrukturen (19) jeder Lagerscheibe unter Bildung eines gemeinsamen Reifenrings (21) durch Nieten (15) miteinander verbunden sind.

6. Rotor nach einem der Ansprüche 1 bis 3, dadurch gekennzeichnet, daß sämtliche Verbindungsstellen zwischen den Lagerscheiben (10a, 10b) und untereinander verklebt sind.

7. Rotor nach einem der Ansprüche 1 bis 6, dadurch gekennzeichnet, daß vom inneren zentralen Ringscheibenbereich Haltestege (20) bildende radiale Vorsprünge ausgehen, die als beidseitige axiale Rührung den inneren, unmittelbar auf der Nabe (12) aufsitzenden schmalen Teilbereich jedes Flachmagneten (17) axial fixieren.

8. Rotor nach einem der Ansprüche 1 bis 7, dadurch gekennzeichnet, daß die Flachmagneten (17) in die von den beidseitigen Lagerscheiben (10a, 10b) gebildeten Fensterausschnitte eingeklebt sind.

9. Rotor nach einem der Ansprüche 1 bis 8, dadurch gekennzeichnet, daß die Quernieten (15) zur Verbindung des äußeren Reifenrings (21) und/oder die Quernieten (15) zur Befestigung jeder Lagerscheibe an der Nabe (12) Auswuchtgewichte tragen oder selbst, gegebenenfalls im Gewicht unterschiedlich und/oder in unterschiedlicher peripherer Verteilung, Auswuchtgewichte sind.

Fig.1

Fig.3

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 761 755  (S. INABA et al.) <br> * Spalte 2, Zeilen 7-52; Figuren 1-7 * <br> --- | 1 | H 02 K   1/28 <br> H 02 K  21/24 |
| A | US-A-2 698 396  (A.L.J.M. STOKMANS) <br> * Spalte 2, Zeilen 38-56; Figur 1 * <br> --- | 1 | |
| A | US-A-4 451 749  (K. KANAYAMA et al.) <br> * Spalte 2, Zeilen 24-28; Figur 2 * <br> ----- | 1,8 | |

**RECHERCHIERTE SACHGEBIETE (Int. Cl.4)**

H 02 K   1/00
H 02 K  21/00
H 02 K  16/00

Der vorliegende Recherchenbericht wurde für alle Patentansprüche erstellt

| Recherchenort | Abschlußdatum der Recherche | Prüfer |
|---|---|---|
| BERLIN | 20-07-1988 | LEOUFFRE M. |